# EUROPEAN PATENT SPECIFICATION

(11) **EP 3 241 920 B1**
(45) Date of publication and mention of the grant of the patent: **04.03.2020**
(21) Application number: 16882803.6
(22) Date of filing: 29.01.2016
(51) Int. Cl.: C22F 1/18, C22F 1/00

(54) **METHOD FOR MANUFACTURING NUCLEAR FUEL ZIRCONIUM PART BY USING MULTI-STAGE HOT-ROLLING**
VERFAHREN ZUR HERSTELLUNG VON ZIRKONIUMTEILEN VON KERNBRENNSTÄBEN MITTELS MEHRSTUFIGEN WARMWALZENS
PROCÉDÉ DE FABRICATION D'UNE PIÈCE DE ZIRCONIUM DE COMBUSTIBLE NUCLÉAIRE AU MOYEN D'UN LAMINAGE À CHAUD À ÉTAGES MULTIPLES

(30) Priority: 27.01.2016 KR 20160009933
(43) Date of publication of application: 08.11.2017
(73) Proprietor: Kepco Nuclear Fuel Co., Ltd, Daejeon 34057 (KR)
(72) Inventor: MOK, Yong Kyoon, Daejeon 34071 (KR); KIM, Yoon Ho, Daejeon 35379 (KR); JUNG, Tae Sik, Daejeon 34130 (KR); LEE, Sung Yong, Daejeon 34052 (KR); JANG, Hun, Sejong 30064 (KR); LEE, Chung Yong, Daejeon 34016 (KR); NA, Yeon Soo, Daejeon 34071 (KR); CHOI, Min Young, Daejeon 35220 (KR); KO, Dae Gyun, Daejeon 34071 (KR); LEE, Seung Jae, Daejeon 34155 (KR); KIM, Jae Ik, Daejeon 34140 (KR)
(74) Representative: Kransell & Wennborg KB
(86) International application number: PCT/KR2016/000967
(87) International publication number: WO 2017/131260

(56) References cited:
- EP-A1- 1 771 591
- EP-A1- 1 930 454
- KR-A- 20020 062 052
- KR-A- 20060 122 823
- KR-A- 20090 117 414
- KR-A- 20120 102 969
- KR-A- 20140 118 949

## Description

### Technical Field

The present invention relates to a method of manufacturing a zirconium nuclear fuel component, and more particularly to a method of manufacturing a zirconium nuclear fuel component, in which an ingot is subjected to multi-pass hot rolling.

### Background Art

In nuclear power plant cores, a zirconium alloy is used as a material not only for nuclear fuel cladding tubes that constitute a nuclear fuel assembly but also for various core structural members, taking into consideration the absorption of neutrons in terms of neutron economics. Zircaloy-4, which was an alloy developed in the early 1950s, (1.20 to 1.70 wt% of tin, 0.18 to 0.24 wt% of iron, 0.07 to 1.13 wt% of chromium, 900 to 1500 ppm of oxygen, < 0.007 wt% of nickel, and the remainder of zirconium), has been utilized in light-water reactors since the 1970s, and was then replaced by alloys added with niobium (Nb). Representative examples thereof are ZIRLO, developed in U.S.A in the late 1980s, and M5, developed in France in the early 1990s, and these exhibit remarkably low in-furnace corrosion behavior compared to the oxidation rate of Zircaloy-4 and are thus still commercially produced as a material for nuclear fuel components, in lieu of Zircaloy-4, and are also employed in commercial nuclear power generation.

However, increasingly safe and economical commercial operation has recently come to be required of nuclear power plants, and is regarded as a performance requirement of nuclear fuel and other in-furnace components to be developed in the future. Specifically, it is necessary to develop nuclear fuel having durability required for economical flexible combustion by regulating the amount of generated power through a load follow operation in order to respond to ever-changing power demands as well as increased safety requirements for preventing the leakage of radioactive material and guaranteeing the integrity of a reactor even in the case of a core-control accident.

The reason why high-temperature oxidation is regarded as important in terms of safety is that the release of a nuclear material due to the deterioration of nuclear fuel integrity upon the explosive oxidation of zirconium and also explosions due to the generation of massive amounts of hydrogen upon reaction with water vapor may threaten the integrity of the reactor and the containment building. Although the core is generally designed to undergo passive cooling even without human intervention, exposure of the core to a water vapor atmosphere due to spillage of cooling water, such as LOCA accidents, may drastically increase the oxidation rate of zirconium, and thus superior high-temperature oxidation resistance, which is required of nuclear fuel in order to resist accidents, is regarded as essential for components that constitute a nuclear fuel assembly.

Furthermore, nuclear power plants need nuclear fuel that enables flexible operation depending on the demand for economical electricity production. Specifically, variable regulation over time of the core power, controlled by the control rods and the borated water, may extend the operating time of the nuclear fuel but may have a strongly negative influence on the mechanical integrity of fuel rods and structural members. In particular, repeated loading and unloading over time result in crack formation and failure due to fatigue behavior. Therefore, the development of nuclear fuel having excellent fatigue resistance aids in the economical operation of nuclear power plants.

Hence, the licensing standards for the commercial development of alloys for recent use in nuclear fuel are stringent, not only from the aspect of market demand but also as dictated by regulatory agencies, and the thorough development of nuclear fuel assembly components able to exhibit improved performance compared to existing Zircaloy-4, ZIRLO, and M5 is currently ongoing.

In order to develop nuclear fuel having superior performance, a zirconium (Zr)-niobium (Nb)-based alloy composition has been intensively studied to date, and a variety of preparation methods thereof have been developed to improve the properties thereof. Conventionally, fine precipitates in the Zr-Nb alloy are uniformly distributed in the matrix through the improvement of the preparation methods. This is to form fine precipitates having high resistance to mechanical deformation and oxidation of nuclear fuel components due to the presence of high-temperature high-pressure cooling water in the furnace. In this regard, conventional techniques for the control of annealing temperature and annealing methods are as follows. EP 1 771 591 discloses a method for manufacturing a sheet metal for use in a boiling water nuclear reactor. The method comprises the steps of providing a material of a zirconium alloy which mainly consists of zirconium, and whose main alloying materials comprises niobium. The material is annealed so that essentially all niobium containing secondary phase particles are transformed to β-niobium particles.

European Patent No. 1225243 discloses a method of manufacturing a high burn-up zirconium alloy tube and sheet, having high corrosion resistance and superior mechanical properties, wherein zirconium is added with 0.05 to 1.8 wt% of niobium and is further added with tin, iron, chromium, copper, manganese, silicon and oxygen, and annealing is performed under the condition in which an accumulated annealing parameter (ΣA), which is the function of annealing time and temperature, is limited to 1.0 × 10⁻¹⁸ hr or less, thus obtaining precipitates having a size of 80 nm or less.

European Patent No. 198,570 discloses a process of manufacturing an alloy wherein, in order to produce a tube having improved corrosion resistance with a thickness of 1 mm or less, zirconium is added with 1 to 2.5 wt% of niobium and is further added with copper, iron, molybdenum, nickel, tungsten, vanadium or chromium. Here, the intermediate annealing temperature does not exceed 650°C and final annealing is performed below 600°C to give precipitates having a size of 80 nm or less and containing Nb uniformly distributed therein.

U.S. Patent No. 4,649,023 discloses an alloy having high corrosion resistance under high-temperature hydration conditions, comprising 0.5 to 2.0 wt% of niobium, tin up to 1.5 wt%, and any one element in an amount up to 0.25 wt% selected from among iron, chromium, molybdenum, vanadium, copper, nickel and tungsten, wherein hot rolling and annealing are performed at a temperature that does not exceed 650°C.

U.S. Patent No. 6,902,634 discloses a zirconium alloy composition having high corrosion resistance under high-temperature hydration conditions, comprising 0.5 to 2.0 wt% of niobium, tin up to 1.5 wt%, and any one element in an amount up to 0.25 wt% selected from among iron, chromium, molybdenum, vanadium, copper, nickel and tungsten. Here, the intermediate annealing temperature between cold-working processes is maintained at 580°C or less and precipitates having a size of 50 to 80 nm are produced.

Korean Patent No. 10-1265261 discloses a zirconium alloy having superior corrosion resistance and high strength, wherein an alloy composition comprising 0.95 to 1.3 wt% of niobium and tin, chromium, copper and oxygen is subjected to cold working and two annealing processes, thereby obtaining precipitates having an average size of about 40 to 60 nm, which are smaller than conventional precipitates having a size of 70 to 90 nm.

The properties of material are usually attributed to microstructures. The properties of a zirconium alloy are also controlled by microstructures, and such microstructures are adjusted by controlling not only the kinds and amounts of alloy elements but also manufacturing processes, such as the annealing temperature and rolling to manufacture final components. In the zirconium alloy, corrosion resistance and mechanical properties are improved by decreasing the size of precipitates, as in the conventional techniques.

In the present invention, in order to increase the performance of a zirconium alloy for use in nuclear fuel having high fatigue resistance under severe operating conditions in which power repeatedly increases or decreases, as well as superior high-temperature oxidation resistance even under emergency conditions in the event of an accident by improving the process of manufacturing the Zr-Nb-based alloy, a multi-pass hot rolling process combined with a continuous cooling process is devised.

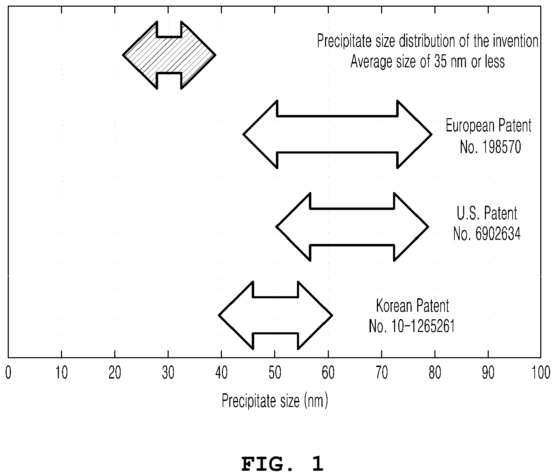

FIG. 1 shows the size ranges of precipitates formed in zirconium alloys according to the conventional techniques and the present invention. The method of manufacturing a zirconium nuclear fuel component, capable of producing precipitates having an average size of 35 nm or less, which is notably smaller than those of the conventional techniques, has been completed through the present invention.

### [Citation List]

European Patent No. 1225243 (Registration Date: 2013.09.04.)
European Patent No. 198570 (Registration Date: 1990.08.29.)
U.S. Patent No. 4,649,023 (Registration Date: 1987.03.10.)
U.S. Patent No. 6,902,634 (Registration Date: 2005.06.07.)
Korean Patent No. 10-1265261 (Registration Date: 2013.05.10.)

### Disclosure

### Technical Problem

Accordingly, the present invention is intended to provide a method of manufacturing a zirconium nuclear fuel component having superior high-temperature oxidation resistance and high fatigue resistance by producing fine precipitates having an average size of 35 nm or less through multi-pass compression deformation upon hot rolling.

### Technical Solution

Therefore, the present invention provides a method of manufacturing a zirconium nuclear fuel component, comprising: forming a zirconium alloy ingot by melting zirconium and constituent alloy elements (step 1);
annealing the ingot formed in step 1 at a zirconium beta-phase temperature of 1000 to 1100°C for 10 to 40 minutes and rapidly cooling the ingot with water (step 2) ;
preheating the ingot rapidly cooled in step 2 before hot rolling (step 3);
forming a multi-pass hot-rolled plate by performing primary hot rolling at a reduction ratio of 30% to 50% and then air cooling during which secondary hot rolling is subsequently conducted at a reduction ratio of 10% to 30% at 580 to 610°C, immediately after the preheating in step 3 (step 4);
subjecting the multi-pass hot-rolled plate obtained in step 4 to primary intermediate annealing and then primary cold rolling (step 5);
subjecting the rolled plate, having undergone the primary cold rolling in step 5, to secondary intermediate annealing and then secondary cold rolling (step 6);
subjecting the rolled plate, having undergone the secondary cold rolling in step 6, to tertiary intermediate annealing and then tertiary cold rolling (step 7); and
subjecting the rolled plate, having undergone the tertiary cold rolling in step 7, to final annealing (step 8). An average size of precipitates in a matrix is controlled to 35 nm or less.

### Advantageous Effects

According to the present invention, a method of manufacturing a zirconium nuclear fuel component having superior high-temperature oxidation resistance and high fatigue resistance is able to form precipitates having an average size of 35 nm or less, which is much finer than those of the same type of zirconium alloy plates manufactured by conventional techniques, thus increasing corrosion resistance in a high-temperature water vapor atmosphere and enhancing resistance to fatigue failure due to the formation of cracks upon repeated loading, thereby increasing safety and reducing the likelihood of an accident due to the leakage of cooling water in the reactor furnace and improving mechanical integrity to fatigue failure due to the operation for increasing power.

### Brief Description of Drawings

FIG. 1 shows the precipitate size distributions according to conventional techniques and a manufacturing process of the present invention;
FIG. 2 is a schematic flowchart sequentially showing a process of manufacturing a zirconium alloy according to the present invention;
FIG. 3 is a graph showing the binary equilibrium state diagram of zirconium and niobium;
FIG. 4 is a graph showing the concept of multi-pass hot rolling according to the present invention;
FIG. 5 shows TEM (Transmission Electron Microscope) microstructure images of precipitates of Example 6 and Comparative Example 6 obtained by the process of the present invention and the conventional process, respectively, using the same alloy composition;
FIG. 6 is a graph showing the results of the average sizes of precipitates and the weight gains thereof due to high-temperature oxidation in Examples and Comparative Examples; and
FIG. 7 is a graph showing the results of the average sizes of precipitates and the number of load cycles to fatigue failure in Examples and Comparative Examples.

### Best Mode

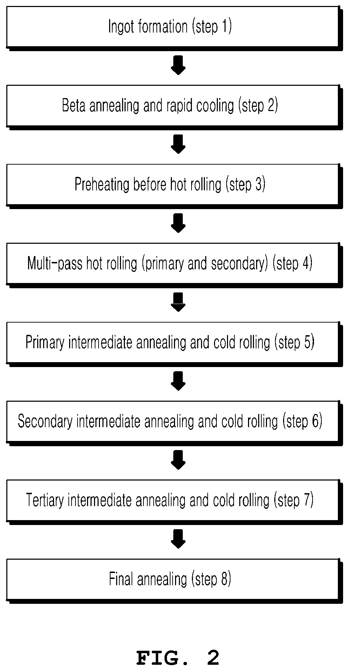

The present invention addresses a method of manufacturing a zirconium nuclear fuel component using multi-pass hot rolling, as shown in FIG. 2, comprising: forming a zirconium alloy ingot by melting zirconium and constituent alloy elements (step 1), annealing the ingot formed in step 1 at a zirconium beta-phase temperature and rapidly cooling the ingot (step 2), preheating the ingot rapidly cooled in step 2 before hot rolling (step 3), forming a multi-pass hot-rolled plate by performing primary hot rolling and then air cooling during which secondary hot rolling is subsequently conducted, immediately after the preheating in step 3 (step 4), subjecting the multi-pass hot-rolled plate obtained in step 4 to primary intermediate annealing and then primary cold rolling (step 5), subjecting the rolled plate, having undergone the primary cold rolling in step 5, to secondary intermediate annealing and then secondary cold rolling (step 6), subjecting the rolled plate, having undergone the secondary cold rolling in step 6, to tertiary intermediate annealing and then tertiary cold rolling (step 7), and subjecting the rolled plate, having undergone the tertiary cold rolling in step 7, to final annealing (step 8).

The specific method of manufacturing the zirconium alloy plate and the corresponding alloy composition are described below, and aspects of the technical construction of hot rolling that are different from those of the conventional technology and the results thereof are explained in detail to show the originality of the invention.

In step 1 of the method of manufacturing the zirconium alloy plate according to the present invention, the corresponding alloy elements are mixed at a predetermined ratio and then cast, thus preparing a zirconium alloy ingot.

In step 1, the ingot is preferably formed through melting using VAR (Vacuum Arc Remelting). Specifically, upon VAR, the ambient atmosphere is maintained at 1 × 10⁻⁵ torr so as to be close to a vacuum, after which argon gas is supplied and current of 200 to 1,000 A is applied to electrode rods of the VAR device to generate arcs so that the alloy elements are melted, followed by cooling, thereby obtaining an ingot in button form. In this way, ingot melting is repeated two to four times using VAR, whereby impurities may be removed and a homogeneous alloy composition may be uniformly distributed in the ingot.

The alloy composition of step 1 comprises 1.3 to 1.8 wt% of niobium (Nb); 0.1 wt% of tin (Sn); 0.1 to 0.3 wt% of chromium (Cr); 600 to 1000 ppm of oxygen (O), and the remainder of zirconium (Zr), or 1.3 to 1.8 wt% of niobium (Nb); 0.1 to 0.3 wt% of copper (Cu); 600 to 1000 ppm of oxygen (O), and the remainder of zirconium (Zr).

### (1) Niobium (Nb)

Niobium (Nb) is a beta-phase Zr-stabilizing element. When Nb is added to an extent equal to or less than the solid solubility thereof in a Zr matrix, it is not affected by annealing procedures and exhibits high corrosion resistance.

Also when Nb is added to an extent equal to or greater than the solid solubility thereof, strength may be increased due to the precipitation-strengthening effect of Nb, which is not dissolved but is precipitated. In this case, however, corrosion resistance may decrease due to the presence of beta-phase Zr unless sufficient annealing is performed.

Although Zircaloy-4 is known to exhibit high corrosion resistance with an increase in the size of precipitates in a pressurized water reactor (PWR) atmosphere, in the case of a zirconium alloy composition in which niobium (Nb) is added to an extent equal to or greater than the solid solubility thereof, corrosion resistance may be increased when precipitates containing niobium (Nb) at a high concentration with a small size are uniformly distributed.

In the zirconium alloy composition for use in nuclear fuel according to the present invention, when chromium (Cr), which is an element for forming precipitates together with niobium (Nb), is added in an amount of 0.3 wt% or less, the formation of coarse precipitates may be prevented only in the presence of 1.8 wt% or less of Nb. When Nb is added in an amount of 1.3 wt% or more, sufficient corrosion resistance may result. Hence, Nb is added in an amount of 1.3 to 1.8 wt%.

### (2) Tin (Sn)

Tin (Sn), which is a substitutional element up to 4.0 wt% in alpha-phase Zr, shows a solid-solution strengthening effect by being dissolved in a Zr matrix.

Sn is essential to maintain mechanical properties of the zirconium alloy such as strength and high-temperature creep, but adversely affects corrosion resistance and is thus added in a small amount in order to increase corrosion resistance. When about 0.1 wt% of tin (Sn) is added under the condition that appropriate mechanical strength is ensured by adding Nb to an extent equal to or greater than the solid solubility thereof, Sn is preferably able to further increase mechanical strength while having a minimum influence on corrosion resistance.

### (3) Chromium (Cr)

Chromium (Cr) is mainly added to increase the corrosion resistance and mechanical properties of the zirconium (Zr) alloy.

In particular, chromium (Cr) is precipitated together with about 500 ppm of iron (Fe), present in the form of impurities in the zirconium sponge, and is known to promote the fine precipitation of niobium (Nb) contained to an extent equal to or greater than the solid solubility thereof at a predetermined ratio of iron (Fe)/chromium (Cr), thereby improving corrosion resistance.

On the other hand, if Cr is added in too low or too high an amount, corrosion resistance may decrease or workability may deteriorate.

Hence, chromium (Cr) is added in an amount of 0.1 to 0.3 wt%.

### (4) Copper (Cu)

Research thereon for use in a high-temperature gas furnace was performed in the 1950s, and Cu is reported to be alloyed with zirconium (Zr) so as to exhibit high corrosion resistance at a high temperature but low corrosion resistance at a low temperature [J. K. Chakravartty and G. K. Dey, Characterization of hot deformation behavior of Zr-2.5Nb-0.5Cu using processing maps. Sep. (1994)].

However, when Cu is alloyed with zirconium (Zr) together with iron (Fe), corrosion resistance higher than that of Zircaloy-2 results [G. C. Imarisio, M. Cocchi and G. Faini/J. Nucl. Mater. 37, (1970) p.257].

Zirconium (Zr) has low solid solubility of copper (Cu). When Cu is added in an amount of 0.1 wt% or more, it may be finely precipitated together with iron (Fe) to thus aid in corrosion resistance. In order to avoid the formation of coarse precipitates, Cu is added in an amount of 0.3 wt% or less, thus preventing workability from deteriorating. Hence, copper (Cu) is added in an amount of 0.1 to 0.3 wt%.

### (5) Oxygen (O)

Oxygen (O) is an alpha-phase Zr-stabilizing element, and functions to improve mechanical properties such as creep and tension by being dissolved in the zirconium (Zr) alloy but does not affect corrosion-related properties.

Thus, in order to ensure both high mechanical properties and workability of the alloy containing niobium (Nb) and chromium (Cr) with improved corrosion resistance, the amount of oxygen (O) falls in the range of 600 to 1000 ppm.

If the amount of oxygen (O) is less than the lower limit, mechanical strength may decrease. On the other hand, if the amount thereof exceeds the upper limit, workability may decrease.

In step 2 of the manufacture of the zirconium alloy plate according to the present invention, the ingot obtained in step 1 is subjected to beta-phase annealing and rapid cooling in order to homogenize the composition in the matrix.

In order to homogenize the composition in the ingot matrix, annealing at 1,000 to 1,100°C for 10 to 40 min and then rapid cooling with water are performed. Specifically, the ingot is annealed in the beta-phase temperature range to prevent partial segregation or the generation of intermetallic compounds after the formation of the ingot through repeated melting in step 1. The range of 1,000 to 1,100°C is the temperature range in which the zirconium alloy becomes a beta phase so that precipitates formed after the preparation of the ingot are sufficiently melted and fast diffusion of the alloy elements is induced, resulting in a uniform concentration distribution in the matrix. Here, the annealing time is set to the range of about 10 to 40 min in order to realize the melting of precipitates and the uniform concentration distribution. In order to maintain the uniform composition in the beta-phase range and the state of dissolved alloy elements even at room temperature, cooling subsequent to annealing has to be conducted very rapidly and thus rapid cooling with water is preferable.

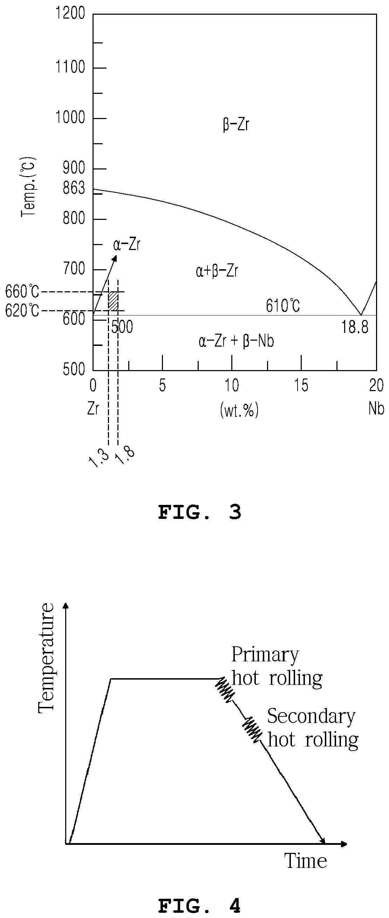

In step 3 of the manufacture of the zirconium alloy plate according to the present invention, the ingot is preheated in order to perform hot rolling. The preheating process is conducted in the temperature range in which the alpha zirconium phase and the beta zirconium phase are mixed, and working is easy in the corresponding temperature range and the state before rolling suitable for breaking the ingot structure may be formed. FIG. 3 shows the equilibrium state diagram of zirconium and niobium. Here, when preheating is performed to a temperature equal to or higher than the monotectoid temperature (610°C), at which the beta-phase zirconium is present, beta-phase zirconium grains are present around the alpha phase and are provided in the form of a film extending long in a rolling direction upon hot rolling to thus form fine beta-phase precipitates around the alpha phase [R. Tewari et al., J. Nucl. Mater. 383(2008) 153, Y.H. Jeong et al., J. Nucl. Mater. 302(2002) 9]. Furthermore, with the goal of reducing unnecessary annealing costs associated with excessive preheating, preheating is carried out at 660°C or less for 20 to 40 min, and preferably at 620 to 660°C for 20 to 40 min.

In step 4 of the manufacture of the zirconium alloy plate according to the present invention, the preheated zirconium alloy ingot is maintained at a preheating temperature and is then subjected to multi-pass hot rolling.

Primary hot rolling is performed, whereby the ingot structure formed in step 1 is broken and a rolled plate suitable for subsequent rapid cooling may be manufactured. Furthermore, the beta-phase zirconium is transformed into a thin long structure in a rolling direction, thus producing fine beta-phase precipitates uniformly distributed in the plate [Y.H. Jeong et al., J. Nucl. Mater. 302(2002) 9]. Here, the primary hot rolling is conducted at a reduction ratio of 30 to 50%.

Also, secondary hot rolling promotes the formation of additional fine precipitates due to grain refinement. The hot rolling process, which is additionally performed during the cooling in the conventional method including only primary hot rolling, may be referred to as "secondary hot rolling". The secondary hot rolling functions to cause dynamic recrystallization due to an increase in internal energy in the matrix by mechanical deformation through additional rolling at an appropriately high temperature, thereby forming fine grains, and also functions to promote the supersaturated nucleation of transition metal elements due to an increase in the area of grain boundaries acting as nucleation sites, yielding fine precipitates. Consequently, this step is responsible for finely controlling the average precipitate size of the zirconium alloy containing niobium (Nb), chromium (Cr), tin (Sn), copper (Cu), and oxygen (O) to thus increase resistance to high-temperature oxidation and to fatigue failure.

The temperature for secondary hot rolling is 580 to 610°C, at which thermal activation energy sufficient for causing dynamic recrystallization is maintained. If the temperature is higher than 610°C, the additional production of early precipitates is caused, and thus coarse precipitates may be formed through continuous cooling and subsequent annealing, undesirably incurring the deterioration of alloy characteristics. On the other hand, if the temperature is lower than 580°C, workability may decrease due to hardening of the already-worked rolled plate. The secondary hot rolling is conducted at a reduction ratio of 10 to 30%. If the reduction ratio is less than 10% in the corresponding temperature range, minimum strain necessary for dynamic recrystallization cannot be obtained. On the other hand, if the reduction ratio exceeds 30%, the tip of the rolled plate may break due to the poor workability thereof.

The multi-pass hot rolling of step 4 is illustrated in FIG. 4.

Subsequently, in step 5 of the manufacture of the zirconium alloy plate according to the present invention, the rolled plate, having undergone the secondary hot rolling in step 4, is subjected to primary intermediate annealing and then primary cold rolling.

The primary intermediate annealing of step 5 has to be preferably performed at 560 to 600°C for 2 to 4 hr. This serves to make the worked structure obtained in step 4 into a recrystallized structure through annealing so as to be suitable for cold working. If the annealing temperature is lower than 560°C, workability may decrease. On the other hand, if the annealing temperature is higher than 600°C, beta-phase zirconium may be formed, and thus corrosion resistance may decrease. If the annealing time is less than 2 hr, it is difficult to obtain overall homogeneous recrystallization in the matrix. On the other hand, if the annealing time exceeds 4 hr, the precipitate phase may become coarse. To obtain the appropriate thickness of the zirconium alloy plate as the final product, primary cold rolling is performed at a reduction ratio of 40 to 60%. If the reduction ratio is less than 40%, the desired alloy plate thickness cannot be obtained. On the other hand, if the reduction ratio exceeds 60%, the plate may break due to excessive deformation.

In step 6 of the manufacture of the zirconium alloy plate according to the present invention, the rolled plate obtained in step 5 is subjected to secondary intermediate annealing and then secondary cold rolling.

Step 6, which is performed in the same manner as step 5, comprises subjecting the rolled plate having the worked structure to intermediate annealing at 560 to 600°C for 2 to 4 hr and then cold rolling at a reduction ratio of 40 to 60%.

In step 7 of the manufacture of the zirconium alloy plate according to the present invention, the rolled plate obtained in step 6 is subjected to tertiary intermediate annealing and then tertiary cold rolling.

Step 7, which is performed in the same manner as steps 5 and 6, comprises subjecting the rolled plate having the worked structure to intermediate annealing at 560 to 600°C for 2 to 4 hr and then cold rolling at a reduction ratio of 40 to 60%.

In step 8 of the manufacture of the zirconium alloy plate according to the present invention, the rolled plate obtained in step 7 is finally annealed.

In step 8, the worked structure of the rolled plate having undergone the tertiary cold rolling is finally annealed, making it possible to remove residual stress and to control the degree of recrystallization. The final annealing is preferably performed at 440 to 480°C for 7 to 9 hr. If the annealing temperature is lower than 440°C, creep resistance may decrease due to a high creep ratio. On the other hand, if the annealing temperature exceeds 480°C, tensile strength may decrease. Also, if the annealing time is less than 7 hr, component workability may decrease due to residual stress. On the other hand, if the annealing time exceeds 9 hr, corrosion resistance may deteriorate due to the formation of a coarse precipitate phase.

Below is a detailed description of the present invention made in connection with various Examples.

### Manufacture of zirconium alloy plate

### (1) Formation of ingot

300 g of a zirconium alloy ingot in button form was prepared from 1.3 wt% of niobium (Nb), 0.1 wt% of tin (Sn), 0.1 wt% of chromium (Cr), 600 ppm of oxygen (O) and the remainder of zirconium (Zr) using VAR (Vacuum Arc Remelting).

Here, the zirconium (Zr) that was used was a refined product having a high purity of 99.99% or more as nuclear-grade sponge suitable for ASTM B349/B349M-09 standards.

The ingot melting using VAR and the solidification were repeated three times to prevent the partial segregation of alloy elements and to remove impurities. Upon melting, argon gas having a high purity of 99.99% was supplied in an atmosphere close to a vacuum of 1 × 10⁻⁵ torr and current of 450 A was applied to tungsten electrode rods, thus preparing a Φ74 mm button-type ingot corresponding to 300 g of the alloy composition.

### (2) Beta annealing and rapid cooling

In order to homogenize the partially heterogeneous composition in the ingot even after three melting-solidification processes, solution treatment was performed for 30 min at 1,020°C, corresponding to the beta (β)-phase temperature, after which the ingot fell into a bath containing water so as to be rapidly cooled, thus obtaining an ingot having a martensitic structure.

### (3) Multi-pass hot rolling

The ingot was preheated at 640°C for 30 min before hot rolling, followed by primary hot rolling at a 40% reduction ratio using a 350-ton roller and then air cooling. During the air cooling, the ingot was subjected to secondary hot rolling at a 20% reduction ratio at 590°C and continuously air-cooled.

As such, in order to remove the generated surface oxide film, mechanical surface polishing was performed using an electric wire brush, and chemical surface polishing was conducted through an immersion process in an etching solution comprising water, nitric acid and hydrofluoric acid at a volume ratio of 40:50:10, thereby removing the surface oxide film.

### (4) Cold rolling and intermediate annealing

The rolled plate having no oxide film was subjected to primary intermediate annealing in a 1 × 10⁻⁵ torr atmosphere at 580°C for 3 hr, and then to furnace cooling.

The primary cold rolling was performed at an overall reduction ratio of 50% using a 350-ton roller.

The secondary intermediate annealing was performed in a 1 × 10⁻⁵ torr atmosphere at 580°C for 2 hr, followed by furnace cooling. The secondary cold rolling was conducted at a 50% reduction ratio.

The tertiary intermediate annealing was carried out in a 1 × 10⁻⁵ torr atmosphere at 580°C for 2 hr, followed by furnace cooling, and the tertiary cold rolling was conducted at a 60% reduction ratio.

### (5) Final annealing

In order to achieve partial recrystallization and remove residual stress from the rolled plate after the tertiary cold rolling, final annealing was performed at 470°C for 8 hr in a 1 × 10⁻⁵ torr atmosphere.

The thickness of the finally rolled plate was about 1 mm.

### <Examples 2 to 12> Manufacture of zirconium alloys 2 to 12

Zirconium alloy plates were manufactured using the compositions of Examples 2 to 12 shown in Table 1 below in the same manner as in Example 1.

### <Comparative Examples 1 to 12>

Zirconium alloy plates having the compositions of Comparative Examples 1 to 12 were manufactured in the same manner as in Example 1, with the exception that only the hot rolling process was changed, as shown in Comparative Examples 1 to 12 in Table 1 below.

**[Table 1]**

| No. | Element ratio of composition | | | | | | Manufacturing method (Hot rolling) | |
|---|---|---|---|---|---|---|---|---|
| Composition (wt%) | Nb | Sn | Cr | Cu | O | Zr | Primary hot rolling Reduction ratio, Temp. | Secondary hot rolling Reduction ratio, Temp. |
| Ex.1 | 1.3 | 0.1 | 0.1 | - | 0.06 | Remainder | 40%, 640°C | 20%, 580°C |
| Ex.2 | 1.3 | 0.1 | 0.3 | - | 0.10 | | | |
| Ex.3 | 1.55 | 0.1 | 0.1 | - | 0.06 | | | |
| Ex.4 | 1.55 | 0.1 | 0.3 | - | 0.10 | | | |
| Ex.5 | 1.8 | 0.1 | 0.1 | - | 0.06 | | | |
| Ex.6 | 1.8 | 0.1 | 0.3 | - | 0.10 | | | |
| Ex.7 | 1.3 | - | - | 0.1 | 0.06 | | | |
| Ex.8 | 1.3 | - | - | 0.3 | 0.10 | | | |
| Ex.9 | 1.55 | - | - | 0.1 | 0.06 | | | |
| Ex.10 | 1.55 | - | - | 0.3 | 0.10 | | | |
| Ex.11 | 1.8 | - | - | 0.1 | 0.06 | | | |
| Ex.12 | 1.8 | - | - | 0.3 | 0.10 | | | |
| C.Ex.1 | 1.1 | 0.1 | 0.1 | - | 0.06 | Remainder | Primary hot rolling | |
| C.Ex.2 | 1.1 | 0.1 | 0.3 | - | 0.10 | | 50%, 640°C | |
| C.Ex.3 | 1.3 | 0.1 | 0.1 | - | 0.06 | | | |
| C.Ex.4 | 1.3 | 0.1 | 0.3 | - | 0.10 | | | |
| C.Ex.5 | 1.5 | 0.1 | 0.1 | - | 0.06 | | | |
| C.Ex.6 | 1.5 | 0.1 | 0.3 | - | 0.10 | | | |
| C.Ex.7 | 1.1 | - | - | 0.1 | 0.06 | | | |
| C.Ex.8 | 1.3 | - | - | 0.3 | 0.10 | | | |
| C.Ex.9 | 1.55 | - | - | 0.1 | 0.06 | | | |
| C.Ex.10 | 1.55 | - | - | 0.3 | 0.10 | | | |
| C.Ex.11 | 1.8 | - | - | 0.1 | 0.06 | | | |
| C.Ex.12 | 1.8 | - | - | 0.3 | 0.10 | | | |

### <Test Example 1> Measurement of size of precipitates using TEM

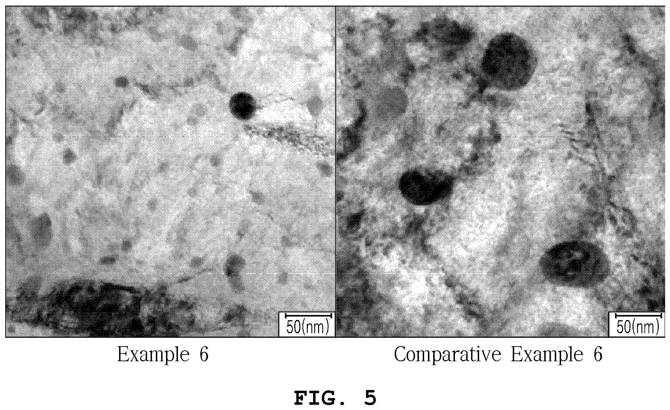

The microstructures of zirconium (Zr) matrixes and precipitates of Comparative Examples 1 to 12, as well as Examples 1 to 12, comprising the zirconium alloy composition for use in nuclear fuel according to the present invention, were observed using a TEM. The average sizes of the precipitates of the Examples and Comparative Examples were measured. Test samples were manufactured using a focused ion beam (FIB), and the size of precipitates was measured using Image analysis software. The measurement results and the images of the precipitates (Example 6 and Comparative Example 6) are shown in Table 2 below and FIG. 5.

**[Table 2]**

| No. | Precipitate average size (nm) |
|---|---|
| Ex.1 | 26.4 |
| Ex.2 | 24.6 |
| Ex.3 | 29.7 |
| Ex.4 | 30.4 |
| Ex.5 | 28.8 |
| Ex.6 | 32.4 |
| Ex.7 (outside the scope of the invention) | 36.5 |
| Ex.8 | 27.3 |
| Ex.9 | 29.9 |
| Ex.10 | 34.6 |
| Ex.11 | 31.3 |
| Ex.12 | 24.6 |
| C.Ex.1 | 76.3 |
| C.Ex.2 | 74.3 |
| C.Ex.3 | 66.3 |
| C.Ex.4 | 74.1 |
| C.Ex.5 | 85.1 |
| C.Ex.6 | 67.6 |
| C.Ex.7 | 81.6 |
| C.Ex.8 | 76.6 |
| C.Ex.9 | 83.3 |
| C.Ex.10 | 79.6 |
| C.Ex.11 | 77.9 |
| C.Ex.12 | 80.2 |

Table 2 show the average sizes of precipitates having undergone the secondary hot rolling in Examples 1 to 12 and precipitates having undergone the primary hot rolling in Comparative Examples 1 to 12. The average size falls in the range of 24.6 to 36.5 nm in Examples 1 to 12 and in the range of 66.3 to 85.1 nm in Comparative Examples 1 to 12. The alloy plates obtained through multi-pass hot rolling can be found to produce precipitates, the size of which is decreased by about 50% or less, compared to the alloy plates obtained through single hot rolling. As illustrated in the actual microstructure images of FIG. 5, the precipitates were drastically decreased in size in Example 6 compared to Comparative Example 6.

Although the overall reduction ratios (multi-pass hot rolling: 52%, conventional primary hot rolling: 50%) were similar, fine precipitates can be confirmed to be formed by the manufacturing method of the present invention through multi-pass hot rolling.

### <Test Example 2> High-temperature oxidation test

In order to evaluate the high-temperature oxidation resistance of the alloys of Examples, the following high-temperature oxidation test was performed.

The alloy plates of the Examples and Comparative Examples were worked to a size of 20 mm × 10 mm × 1 mm, mechanically surface-polished 2,000 times using a silicon carbide polishing paper, and immersed in an etching solution comprising water, nitric acid and hydrofluoric acid at a volume ratio of 40:50:10 so that the surfaces thereof were finely chemically polished.

In order to measure weight gain per unit surface area, initial weights and surface areas of individual alloys were measured, after which water vapor was allowed to flow at a flow rate of 4 g/h at 1200°C under 1 atm for 3600 sec through TGA (Thermogravimetric analysis), and thus the increased weights of the samples due to surface oxidation were measured. The results of measurement of weight gain relative to the surface area of the alloy plate of each of the Examples and Comparative Examples are shown in Table 3 below.

**[Table 3]**

| | 1200°C, Water vapor, 3600 sec |
|---|---|
| | Weight gain (mg/dm²) |
| Ex.1 | 1,121.6 |
| Ex.2 | 1,125.4 |
| Ex.3 | 1,135.5 |
| Ex.4 | 1,143.1 |
| Ex.5 | 1,113.6 |
| Ex.6 | 1,124.8 |
| Ex.7 | 1,068.0 |
| Ex.8 | 1,077.5 |
| Ex.9 | 1,056.6 |
| Ex.10 | 1,054.1 |
| Ex.11 | 1,043.5 |
| Ex.12 | 1,064.3 |
| C.Ex.1 | 1,314.3 |
| C.Ex.2 | 1,308.1 |
| C.Ex.3 | 1,354.2 |
| C.Ex.4 | 1,358.3 |
| C.Ex.5 | 1,344.3 |
| C.Ex.6 | 1,335.8 |
| C.Ex.7 | 1,245.6 |
| C.Ex.8 | 1,215.3 |
| C.Ex.9 | 1,234.4 |
| C.Ex.10 | 1,314.1 |
| C.Ex.11 | 1,285.6 |
| C.Ex.12 | 1,354.3 |

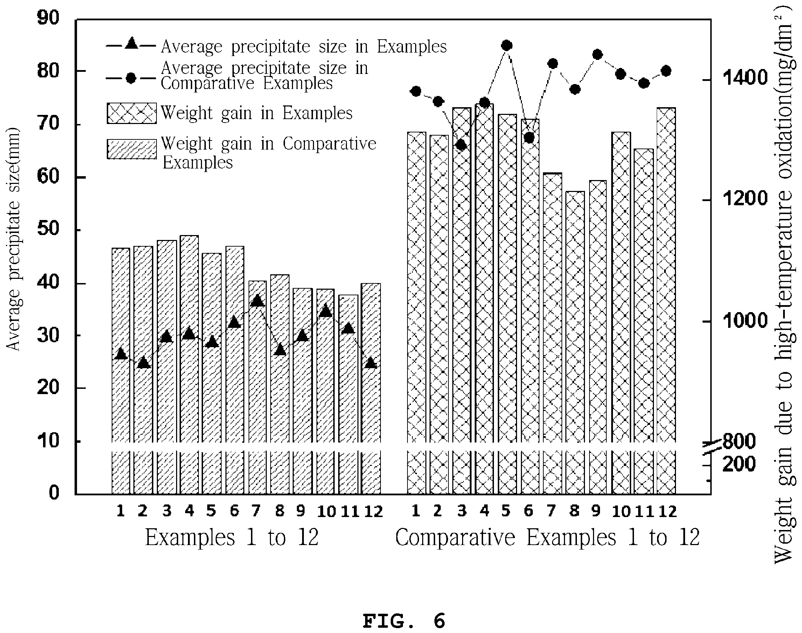

As is apparent from the results of Table 3 and FIG. 6, the weight gain (1043.5 to 1143.1 mg/dm²) per unit surface area of Examples 1 to 12 comprising the alloy composition of the present invention was lower than the weight gain (1215.3 to 1358.3 mg/dm²) per unit surface area of Comparative Examples 1 to 12, from which superior high-temperature oxidation resistance is evaluated to result.

### <Test Example 3> Fatigue test

In order to measure the number of cycles to fatigue failure in the alloys of the Examples and Comparative Examples, fatigue testing was performed by applying 400 MPa (load) in an axial direction at 20 Hz frequency in accordance with ASTM E466 standard using a 10-ton universal testing machine at room temperature.

**[Table 4]**

| | 20 Hz, 400 MPa |
|---|---|
| | Number of cycles to failure (Repeated cycles) |
| Ex.1 | 22,947 |
| Ex.2 | 22,619 |
| Ex.3 | 23,494 |
| Ex.4 | 24,109 |
| Ex.5 | 22,947 |
| Ex.6 | 23,815 |
| Ex.7 | 21,351 |
| Ex.8 | 20,231 |
| Ex.9 | 21,302 |
| Ex.10 | 22,068 |
| Ex.11 | 21,039 |
| Ex.12 | 21,157 |
| C.Ex.1 | 18,204 |
| C.Ex.2 | 16,515 |
| C.Ex.3 | 17,513 |
| C.Ex.4 | 18,954 |
| C.Ex.5 | 18,645 |
| C.Ex.6 | 18,982 |
| C.Ex.7 | 18,942 |
| C.Ex.8 | 17,682 |
| C.Ex.9 | 18,430 |
| C.Ex.10 | 17,569 |
| C.Ex.11 | 16,571 |
| C.Ex.12 | 18,934 |

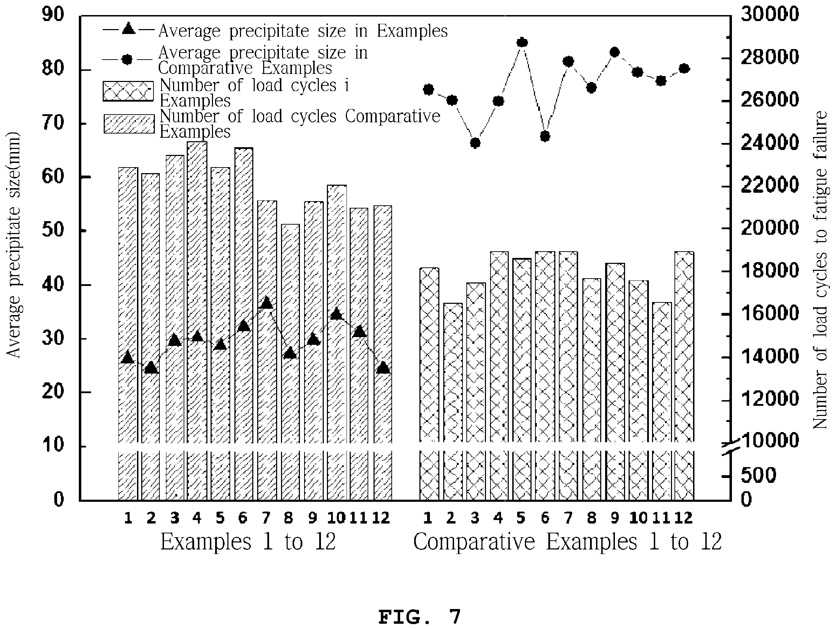

Table 4 and FIG. 7 show the number of cycles to failure due to repeated loading at room temperature in the Examples and Comparative Examples. The number of cycles to failure through the axial load fatigue test of the zirconium alloy plates for use in nuclear fuel according to the present invention was higher in Examples (20,231 to 24,109 cycles) than in Comparative Examples (16,515 to 18,954 cycles), thus exhibiting improved mechanical fatigue properties.

As set forth in Tables 1 to 4 and FIGS. 6 and 7, when the multi-pass hot rolling in step 4 was conducted in a manner in which primary hot rolling at a reduction ratio of 30% to 50% and secondary hot rolling at a reduction ratio of 10% to 30% at 580 to 600°C were performed, particles of the precipitates became fine and high-temperature corrosion resistance was remarkably improved, and also, the number of load cycles to fatigue failure were considerably increased, ultimately increasing both corrosion resistance and mechanical performance.

The preferred embodiments disclosed in the present invention are not restrictive but are illustrative, and the scope of the present invention is given by the appended claims, and also contains all modifications within the meaning of the claims.

## Claims

1. A method of manufacturing a zirconium nuclear fuel component, comprising:
forming a zirconium alloy ingot by melting zirconium and constituent alloy elements (step 1);
annealing the ingot formed in step 1 at a zirconium beta-phase temperature of 1000 to 1100°C for 10 to 40 minutes and rapidly cooling the ingot with water (step 2);
preheating the ingot rapidly cooled in step 2 before hot rolling (step 3);
forming a multi-pass hot-rolled plate by performing primary hot rolling at a reduction ratio of 30% to 50% and then air cooling during which secondary hot rolling is subsequently carried out at a reduction ratio of 10% to 30% at 580 to 610°C, immediately after the preheating in step 3 (step 4);
subjecting the multi-pass hot-rolled plate obtained in step 4 to primary intermediate annealing and then primary cold rolling (step 5);
subjecting the rolled plate, having undergone the primary cold rolling in step 5, to secondary intermediate annealing and then secondary cold rolling (step 6);
subjecting the rolled plate, having undergone the secondary cold rolling in step 6, to tertiary intermediate annealing and then tertiary cold rolling (step 7); and
subjecting the rolled plate, having undergone the tertiary cold rolling in step 7, to final annealing (step 8);
whereby an average size of precipitates in a matrix is controlled to 35 nm or less;
wherein the zirconium alloy ingot comprises 1.3 to 1.8 wt% of niobium (Nb); 0.1 wt% of tin (Sn); 0.1 to 0.3 wt% of chromium (Cr); 600 to 1,000 ppm of oxygen (O) and a remainder of zirconium (Zr); or the zirconium alloy ingot comprises 1.3 to 1.8 wt% of niobium (Nb); 0.1 to 0.3 wt% of copper (Cu); 600 to 1,000 ppm of oxygen (O) and a remainder of zirconium (Zr).

2. The method of claim 1, wherein the primary hot rolling in step 4 is performed at a reduction ratio of 40%.

3. The method of claim 1, wherein the secondary hot rolling in step 4 is performed at a reduction ratio of 20% at 580 to 600°C.

4. The method of any preceding claim, wherein the preheating is in the temperature range in which the alpha zirconium phase and the beta zirconium phase are mixed, such as at a temperature of at least 610°C and/or at a temperature of at most 660°C for 20 to 40 minutes, preferably at a temperature within the range of 620 to 660°C for 20 to 40 minutes.

5. The method of any preceding claim, wherein the primary intermediate annealing is performed at 560 to 600°C for 2 to 4 hours.

6. The method of any preceding claim, wherein the primary cold rolling is performed at a reduction ratio of 40 to 60%.

7. The method of any preceding claim, wherein the secondary intermediate annealing is performed at 560 to 600°C for 2 to 4 hours.

8. The method of any preceding claim, wherein the secondary cold rolling is performed at a reduction ratio of 40 to 60%.

9. The method of any preceding claim, wherein the tertiary intermediate annealing is performed at 560 to 600°C for 2 to 4 hours.

10. The method of any preceding claim, wherein the tertiary cold rolling is performed at a reduction ratio of 40 to 60%.

11. The method of any preceding claim, wherein the final annealing is performed at 440 to 480°C for 7 to 9 hours.

## Patentansprüche

1. Verfahren zur Herstellung einer Zirkonium-Kernbrennstoffkomponente, umfassend:
Ausbilden eines Zirkoniumlegierungsblocks durch Schmelzen von Zirkonium und Elementarbestandteilen der Legierung (Schritt 1);
Glühen des Blocks, der in Schritt 1 ausgebildet wurde, bei einer Beta-Phasen-Temperatur von Zirkonium von 1000 bis 1100 °C für 10 bis 40 Minuten und rasches Kühlen des Blocks mit Wasser (Schritt 2);
Vorwärmen des Blocks, der in Schritt 2 rasch gekühlt wurde, vor einem Warmwalzen (Schritt 3);
Ausbilden einer in mehreren Durchgängen warmgewalzten Platte durch Vornehmen eines primären Warmwalzens mit einer Reduzierung von 30 % bis 50 % und anschließendes Luftkühlen, währenddessen nachfolgend ein sekundäres Warmwalzen mit einer Reduzierung von 10 % bis 30 % bei 580 bis 610 °C durchgeführt wird, unmittelbar nach dem Vorwärmen in Schritt 3 (Schritt 4);
Vornehmen eines primären Zwischenglühens und anschließenden primären Kaltwalzens der in mehreren Durchgängen warmgewalzten Platte, die in Schritt 4 erhalten wurde (Schritt 5);
Vornehmen eines sekundären Zwischenglühens und anschließenden sekundären Kaltwalzens der gewalzten Platte, die in Schritt 5 dem primären Kaltwalzen unterzogen wurde (Schritt 6);
Vornehmen eines tertiären Zwischenglühens und anschließenden tertiären Kaltwalzens der gewalzten Platte, die in Schritt 6 dem sekundären Kaltwalzen unterzogen wurde (Schritt 7);
Vornehmen eines Schlussglühens der gewalzten Platte, die in Schritt 7 dem tertiären Kaltwalzen unterzogen wurde (Schritt 8);
wodurch eine durchschnittliche Größe von Niederschlägen in einer Matrix auf 35 nm oder weniger beschränkt wird;
wobei der Zirkoniumlegierungsblock 1,3 bis 1,8 Gew.-% Niob (Nb); 0,1 Gew.-% Zinn (Sn); 0,1 bis 0,3 Gew.-% Chrom (Cr); 600 bis 1.000 ppm Sauerstoff (O) und einen Rest Zirkonium (Zr) umfasst; oder der Zirkoniumlegierungsblock 1,3 bis 1,8 Gew.-% Niob (Nb); 0,1 bis 0,3 Gew.-% Kupfer (Cu); 600 bis 1.000 ppm Sauerstoff (O) und einen Rest Zirkonium (Zr) umfasst.

2. Verfahren nach Anspruch 1, wobei das primäre Warmwalzen in Schritt 4 mit einer Reduzierung von 40 % erfolgt.

3. Verfahren nach Anspruch 1, wobei das sekundäre Warmwalzen in Schritt 4 mit einer Reduzierung von 20 % bei 580 bis 600 °C erfolgt.

4. Verfahren nach einem vorhergehenden Anspruch, wobei das Vorwärmen in dem Temperaturbereich, in dem die Alpha-Phase von Zirkonium und die Beta-Phase von Zirkonium gemischt vorliegen, wie etwa bei einer Temperatur von wenigstens 610 °C und/oder bei einer Temperatur von höchstens 660 °C, für 20 bis 40 Minuten, vorzugsweise bei einer Temperatur im Bereich von 620 bis 660 °C für 20 bis 40 Minuten, erfolgt.

5. Verfahren nach einem vorhergehenden Anspruch, wobei das primäre Zwischenglühen bei 560 bis 600 °C für 2 bis 4 Stunden erfolgt.

6. Verfahren nach einem vorhergehenden Anspruch, wobei das primäre Kaltwalzen mit einer Reduzierung von 40 bis 60 % erfolgt.

7. Verfahren nach einem vorhergehenden Anspruch, wobei das sekundäre Zwischenglühen bei 560 bis 600 °C für 2 bis 4 Stunden erfolgt.

8. Verfahren nach einem vorhergehenden Anspruch, wobei das sekundäre Kaltwalzen mit einer Reduzierung von 40 bis 60 % erfolgt.

9. Verfahren nach einem vorhergehenden Anspruch, wobei das tertiäre Zwischenglühen bei 560 bis 600 °C für 2 bis 4 Stunden erfolgt.

10. Verfahren nach einem vorhergehenden Anspruch, wobei das tertiäre Kaltwalzen mit einer Reduzierung von 40 bis 60 % erfolgt.

11. Verfahren nach einem vorhergehenden Anspruch, wobei das Schlussglühen bei 440 bis 480 °C für 7 bis 9 Stunden erfolgt.

## Revendications

1. Procédé de fabrication d'un composant de combustible nucléaire de zirconium, comprenant :
la formation d'un lingot d'alliage de zirconium en faisant fondre de zirconium et des éléments constitutifs de l'alliage (étape 1) ;
la recuisson du lingot formé lors de l'étape 1 à une température de phase de bêta zirconium comprise entre 1000 et 1100 °C pendant 10 à 40 minutes et le refroidissement rapide du lingot en utilisant de l'eau (étape 2) ;
le préchauffage du lingot rapidement refroidi lors de l'étape 2 avant son laminage à chaud (étape 3) ;
la formation d'une plaque laminée à chaud à passes multiples en réalisant un laminage à chaud primaire à un rapport de réduction compris entre 30 et 50 % suivi du refroidissement à l'air pendant lequel un laminage à chaud secondaire est ensuite effectué à un rapport de réduction compris entre 10 et 30 % à une température comprise entre 580 et 110 °C, immédiatement après le préchauffage lors de l'étape 3 (étape 4) ;
l'assujettissement de la plaque laminée à chaud à passes multiples obtenue lors de l'étape 4 à une recuisson intermédiaire primaire suivi de son laminage à froid primaire (étape 5) ;
l'assujettissement de la plaque laminée, ayant subi le laminage à froid primaire lors de l'étape 5, à une recuisson intermédiaire secondaire suivi de son laminage à froid secondaire (étape 6) ;
l'assujettissement de la plaque laminée, ayant subi le laminage à froid secondaire lors de l'étape 6, à une recuisson intermédiaire tertiaire suivi de son laminage à froid tertiaire (étape 7) ; et
l'assujettissement de la plaque laminée, ayant subi le laminage à froid tertiaire lors de l'étape 7, à une recuisson finale (étape 8) ;
moyennant quoi une taille moyenne des précipités dans la matrice est contrôlée pour être inférieure ou égale à 35 nm ;
dans lequel le lingot d'alliage de zirconium comprend entre 0,1 et 0,3 % en poids de niobium (Nb) ; 0,1 % en poids d'étain (Sn) ; entre 0,1 et 0,3 % en poids de chrome (Cr) ; entre 600 et 1000 ppm d'oxygène (O) et un reste de zirconium (Zr) ; ou le lingot d'alliage de zirconium comprend entre 1,3 et 1,8 % en poids de niobium (Nb) ; entre 0,1 et 0,3 % en poids de cuivre (Cu) ; entre 600 et 1000 ppm d'oxygène (O) et un reste de zirconium (Zr).

2. Procédé selon la revendication 1, dans lequel le laminage à chaud primaire lors de l'étape 4 est réalisé à un rapport de réduction de 40 %.

3. Procédé selon la revendication 1, dans lequel le laminage à chaud secondaire lors de l'étape 4 est réalisé à un rapport de réduction de 20 % à une température comprise entre 580 et 600 °C.

4. Procédé selon l'une quelconque des revendications précédentes, dans lequel le préchauffage se trouve dans la plage de températures dans laquelle la phase d'alpha zirconium et la phase de bêta zirconium sont mélangées, de telle sorte qu'à une température d'au moins 610 °C et/ou à une température d'au plus 660 °C pendant 20 à 40 minutes, de préférence à une température comprise dans la plage allant de 620 à 660 °C pendant 20 à 40 minutes.

5. Procédé selon l'une quelconque des revendications précédentes, dans lequel la recuisson intermédiaire primaire est réalisée à une température comprise entre 560 et 600 °C pendant 2 à 4 heures.

6. Procédé selon l'une quelconque des revendications précédentes, dans lequel le laminage à froid primaire est réalisé à un rapport de réduction compris entre 40 et 60 %.

7. Procédé selon l'une quelconque des revendications précédentes, dans lequel la recuisson intermédiaire secondaire est réalisée à une température comprise entre 560 et 600 °C pendant 2 à 4 heures.

8. Procédé selon l'une quelconque des revendications précédentes, dans lequel le laminage à froid secondaire est réalisé à un rapport de réduction compris entre 40 et 60 %.

9. Procédé selon l'une quelconque des revendications précédentes, dans lequel la recuisson intermédiaire tertiaire est réalisée à une température comprise entre 560 et 600 °C pendant 2 à 4 heures.

10. Procédé selon l'une quelconque des revendications précédentes, dans lequel le laminage à froid tertiaire est réalisé à un rapport de réduction compris entre 40 et 60 %.

11. Procédé selon l'une quelconque des revendications précédentes, dans lequel la recuisson finale est réalisée à une température comprise entre 440 et 480 °C pendant 7 à 9 heures.
